# FASCICULE DE BREVET EUROPEEN

(11) **EP 0 691 192 B1**
(45) Date de publication et mention de la délivrance du brevet: **22.03.2000**
(21) Numéro de dépôt: 95420192.7
(22) Date de dépôt: 07.07.1995
(51) Int. Cl.: B29C 47/30, B29C 47/86, B29B 13/02

(54) **Procédé et dispositif de fabrication de polymères**
Verfahren und Vorrichtung zur Herstellung von Polymeren
Process and apparatus for manufacturing polymers

(30) Priorité: 08.07.1994 FR 9408781
(43) Date de publication de la demande: 10.01.1996
(73) Titulaire: RHODIA CHIMIE, 92408 Courbevoie Cédex (FR)
(72) Inventeur: Riou, André, F-69190 - Saint-Fons (FR)
(74) Mandataire: Esson, Jean-Pierre

(56) Documents cités:
- US-A- 3 521 325
- DATABASE WPI Week 9105 Derwent Publications Ltd., London, GB; AN 91-032472 & JP-A-02 301 505 (KAWASAKI STEEL K.K.) , 13 Décembre 1990
- PATENT ABSTRACTS OF JAPAN vol. 12 no. 28 (C-471) ,27 Janvier 1988 & JP-A-62 177207 (TORAY IND. INC.) 4 Août 1987,
- PATENT ABSTRACTS OF JAPAN vol. 17 no. 349 (C-1078) ,2 Juillet 1993 & JP-A-05 044105 (TORAY IND. INC.) 23 Février 1993,
- PATENT ABSTRACTS OF JAPAN vol. 7 no. 9 (M-185) ,14 Janvier 1983 & JP-A-57 167209 (NIHON KOUSHIYUUHA K.K.) 15 Octobre 1982,
- DATABASE WPI Week 8212 Derwent Publications Ltd., London, GB; AN 82-D2150E & JP-A-57 026 420 (FUJI ELECTRIC CO. LTD.) , 12 Février 1982
- DATABASE WPI Week 8905 Derwent Publications Ltd., London, GB; AN 89-036031 & JP-A-63 309 408 (INOUE JAPAX RES. INC.) , 16 Décembre 1988

## Description

La présente invention concerne un procédé et un dispositif pour la fabrication de polymères.

Elle concerne plus particulièrement un dispositif et un procédé d'extrusion des polymères sous forme de joncs, et plus particulièrement l'extrusion des polymères thermoplastiques.

Les polymères thermoplastiques tels que les polyesters, polyamides sont généralement fabriqués dans des réacteurs fonctionnant en continu ou discontinu, la fin de réaction étant contrôlée par la viscosité du milieu réactionnel. En fin de réaction, les polymères sont coulés à travers une filière de coulée comprenant des trous de diamètre égal à quelques millimètres, pour former des joncs. Ces joncs sont généralement refroidis après la sortie de filière, par exemple par de l'eau, puis découpés pour former des granulés. Ces granulés sont utilisés comme matières premières par les industries de mise en forme telle que l'industrie textile ou de la fabrication de fils ou fibres, l'industrie de réalisation de compounds pour la fabrication de pièces moulées en matières plastiques.

Les industries utilisatrices ou de transformation demandent une qualité élevée du polymère, et notamment une grande régularité de la qualité. En effet, si certains granulés présentent une qualité médiocre, telle que mauvais degré de polymérisation, degré de dégradation élevé, degré de cristallinité différent, ces irrégularités peuvent provoquer des casses lors de la fabrication de fils de titre fin ou des points de faiblesse mécanique dans les pièces moulées, ou les fils de plus gros titres tels que les monofilaments.

Dans les procédés actuels, ces irrégularités interviennent principalement lors des phases de début et fin d'opération dans les procédés discontinus, ou à l'occasion d'anomalies de fonctionnement des procédés continus.

Ainsi, à titre d'illustration, dans les procédés discontinus la filière de coulée et la vanne de fond du réacteur de polymérisation retiennent une certaine quantité de polymère en fin de coulée d'une opération. Ce polymère est en contact avec l'oxygène de l'air et subit donc une dégradation entre deux coulées. Lors de la coulée suivante, ce polymère dégradé devra être éjecté et rejeté par le flux du nouveau polymère.

Ce rejet qui peut être de l'ordre de plusieurs kilogrammes représente une diminution de la rentabilité du procédé. En outre, il est impossible de contrôler et déterminer de manière précise quelle quantité de rejet devra être effectuée pour éviter toute pollution de la production.

En outre, dans les procédés actuels, la température de la filière n'est pas contrôlée de manière uniforme, ce qui peut provoquer la présence de trous bouchés lors du début de la coulée, et des différences de propriétés entre les joncs.

Le brevet US-A-3 521 325 enseigne le chauffage des filières par induction électromagnétique pendant la phase d'extrusion.

L'invention a notamment pour but de proposer un procédé de fabrication d'un polymère thermoplastique permettant de contrôler la température de la filière de coulée pour améliorer la qualité et l'homogénéité du polymère produit et diminuer ou même supprimer les rejets de polymère en début et fin d'opération.

A cet effet, l'invention propose un procédé de fabrication de polymères thermoplastiques consistant à réaliser la polymérisation jusqu'à un degré déterminé de polymérisation puis à couler le polymère fondu à travers les trous d'une filière de coulée pour former des fils ou joncs et récupérer ceux-ci pour, par exemple, produire des granulés par coupe des joncs. Selon ce procédé, la température de la filière de coulée, au moins au voisinage des trous de filière, est contrôlée et régulée par un ou des moyens de chauffage et de refroidissement disposés au voisinage des trous de filières.

Ainsi, la filière pourra être portée en température avant le début d'une coulée de polymère pour limiter la formation de bouchons.

En outre, la température de la filière étant homogène, tous les joncs de polymère extrudés subissent un refroidissement identique, produisant ainsi un polymère homogène, notamment sur le plan du degré de cristallinité et de la couleur.

Selon une autre caractéristique de l'invention, la température de la filière est régulée par un chauffage par induction électromagnétique, les moyens de chauffage et de refroidissement comprenant au moins un inducteur électromagnétique.

Par ailleurs, le chauffage par induction électromagnétique peut permettre un chauffage très rapide voir instantané diminuant ainsi les problèmes d'inertie thermique de la filière. Ainsi, l'écoulement du polymère est amélioré car sa température est au moins maintenue à la température du réacteur de polycondensation.

Un autre avantage important du chauffage par induction électromagnétique réside dans le fait qu'il permet de réguler la température de la filière grâce à des inducteurs électromagnétiques comprenant un circuit de refroidissement, notamment un circuit de refroidissement par circulation d'eau ou d'air. En conséquence, de tels inducteurs permettent de chauffer la filière mais également de la refroidir.

Toutefois, selon le procédé de l'invention on peut prévoir un circuit indépendant de refroidissement de la filière, par exemple en prévoyant des conduits de circulation d'un fluide porteur de frigories sur ou dans la masse de la filière. Dans ce mode de réalisation, les moyens de refroidissement sont distincts des moyens de chauffage.

Selon le procédé de l'invention, la température du polymère dans les trous de filière peut être contrôlée et maintenue homogène.

En outre, avant le début de chaque opération la filière peut être chauffée très rapidement à une température voisine de la température de coulée du polymère pour ainsi permettre l'éjection rapide du polymère contenu dans les trous de filière et résidu de la coulée précédente.

Dans un autre mode de réalisation du procédé de l'invention, après la fin de la coulée, la filière est refroidie à une température telle que le polymère est dans un état figé, c'est à dire ne s'écoule pas sous son propre poids, mais que sa surface reste adhésive à la paroi du trou de filière. Ainsi, le polymère fige dans les trous de filière pour former des bouchons étanches. Pour plus de clarté cette température sera appelée température de refroidissement.

Les températures limites entre lesquelles doit se situer la température de refroidissement peuvent être illustrées, pour la limite supérieure par la température de ramollissement du polymère et pour la limite inférieure par la température de cristallisation de celui-ci.

Ces bouchons étanches isolent le reste du polymère contenu dans la filière et dans le système vanne/buse de coulée du polymère disposé en fond du réacteur de polymérisation, d'une contamination par l'air.

Ces bouchons améliorent l'étanchéité de la vanne de fond du réacteur qui présente souvent des fuites dues à l'usure provoquée par le pouvoir abrasif du polymère.

Avant la coulée suivante, la filière est chauffée à une température voisine de la température de coulée, l'éjection des bouchons étant réalisée instantanément dès l'ouverture de la vanne de fond du réacteur de polymérisation.

Cette première partie de polymère formant les bouchons doit être rejetée pour éviter la pollution du polymère total par le polymère constituant les bouchons qui a subi une dégradation par contact avec l'air. Toutefois, après quelques secondes de coulée, la production peut être récupérée car elle n'est pas polluée par les résidus de la coulée précédente. Ainsi, le polymère ayant résidé dans la filière et le système vanne/buse de coulée n'ayant subi aucune dégradation peut être incorporé à la production sans risque de pollution de celle-ci.

De ce fait, les pertes de polymères en fin et au début de chaque coulée sont diminuées de plusieurs kilogrammes.

L'invention a également pour objet une filière comprenant des moyens de chauffage et de refroidissement pour réguler sa température.

De préférence, les moyens de chauffage sont constitués d'au moins un inducteur électromagnétique.

L'inducteur électromagnétique est avantageusement revêtu d'une couche isolante résistante à des températures élevées, par exemple nettement supérieures à la température de fusion des polymères thermoplastiques.

Selon un mode de réalisation de l'invention, le ou les inducteurs électromagnétiques sont disposées au voisinage des extrémités débouchantes des trous de la filière, par exemple dans une rainure formée sur la face extérieure de sortie des joncs de la filière. En outre les inducteurs sont disposés de telle manière que les trous de la filière sont dans le champ électromagnétique généré par ceux-ci.

Selon une autre caractéristique préférée, les inducteurs électromagnétiques comprennent un circuit de refroidissement, de préférence le fluide réfrigérant est l'eau.

La puissance, la longueur ou le nombre des inducteurs sont déterminés en fonction de la filière à chauffer.

Le procédé et le dispositif de l'invention peuvent s'appliquer à la fabrication de nombreux polymères, aussi bien dans les procédés continus que discontinus.

Ce procédé s'applique notamment à la fabrication des polyesters tels que les polytéréphtalates d'éthylèneglycol, polytéréphtalates de butylèneglycol, copolyesters, les polyesters thermotropes etc..., de polyamides comme les polyamides 6.6, 6, 6.12, 6.10 etc ..., l'acétate de cellulose.

Plus généralement le procédé s'applique aux fabrications de polymères dans lesquelles le polymère est coulée dans une filière en sortie de réacteur de polymérisation.

D'autres buts, avantages et détails apparaîtront plus clairement au vu des exemples donnés uniquement à titre indicatif et de la description d'un dispositif faite en référence aux figures annexées représentant un mode de réalisation de l'invention et dans lesquelles :
- la figure 1 est un schéma synoptique d'un dispositif polymériseur/système de coulée d'une installation de production de polyester,
- la figure 2 est une vue schématique de la face inférieure d'un mode de réalisation d'une filière conforme à l'invention, et
- la figure 3 est une vue schématique en coupe avec agrandissement selon la ligne III - III de la figure 2.

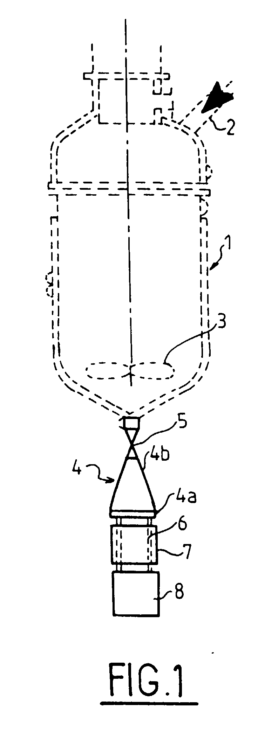

Les procédés de fabrication de polymères, notamment de polymères thermoplastiques sont généralement mis en oeuvre dans des installations comprenant des réacteurs agités dans lesquels est réalisée la polymérisation. Un exemple de réacteur 1, est illustré à la figure 1. Les monomères et autres additifs sont introduits dans le réacteur 1 par l'entrée 2. La masse réactionnelle est portée à la température de polymérisation, sous agitation. L'avancement de la polymérisation est déterminée par la mesure de l'évolution du couple des forces nécessaire pour entraîner l'agitateur 3. En effet, ce couple est fonction de la viscosité du mélange réactionnel.

Quand le degré de polymérisation ou la viscosité désiré est atteint, le polymère est coulé à travers la buse 4a et la filière 4b par ouverture de la vanne de fond 5. L'ensemble buse 4a et filière 4b constitue le bloc filière 4.

Les joncs 6 sortant de la filière sont refroidis par un rideau d'eau 7 et alimentés dans un granulateur 8 qui coupe les joncs en granulés de quelques millimètres de longueur. Les granulés sont ensuite séchés puis stockés dans des silos après un éventuel tamisage.

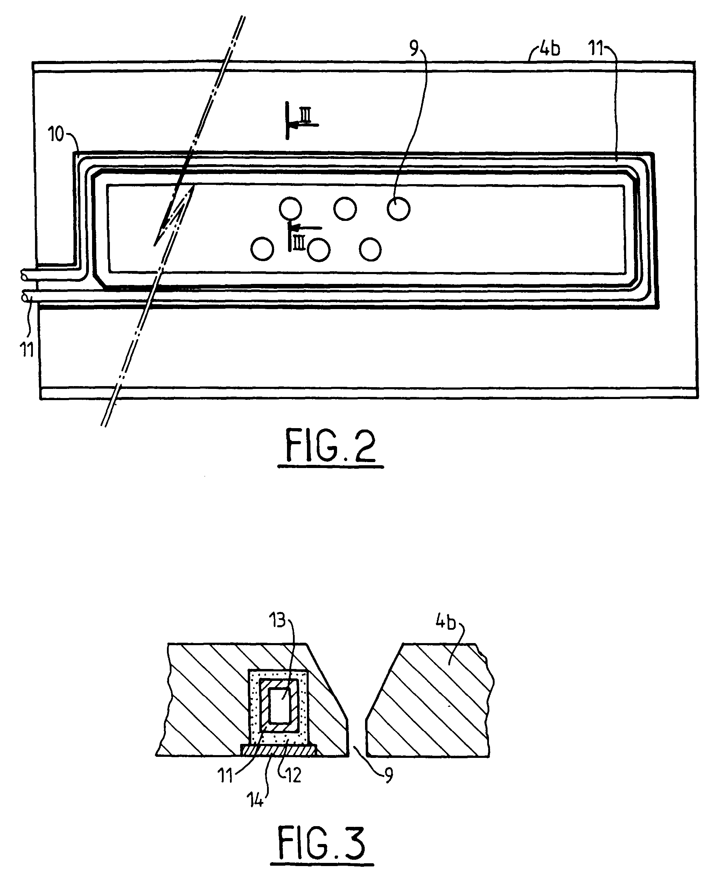

Selon l'invention, la filière 4b représentée aux figures 2 et 3 est une masse métallique par exemple parallélépipédique comprenant des trous 9 de filière dans lesquels sont formés les joncs 6.

Cette filière peut comprendre des plaques (non représentées) qui permettent d'obturer les trous de filières. Cette plaque est par exemple disposée sur la face d'entrée de la filière.

Selon l'invention, la face de sortie de la filière comprend une gorge 10 au voisinage des trous de filière 9. Un inducteur électromagnétique 11 est disposé dans cette gorge, avantageusement obturée par une plaque 14.

Cet inducteur, illustré à la figure 3, est revêtu d'une couche 12 isolante électriquement mais avantageusement bonne conductrice de la chaleur. Par ailleurs, cette couche 12 isolante devra résister aux températures de coulée des polymères, c'est-à-dire à des températures de l'ordre de 250°C à 400°C.

Comme matière isolante, on peut citer les poudres céramiques telles que la magnésie ou le nitrure de bore.

Selon un autre mode de réalisation, l'inducteur 11 est disposé dans la gorge 10, celle-ci étant remplie par un isolant 12.

Les inducteurs 11 sont des dispositifs comprenant un solénoïde qui peut être un inducteur monospire disposé autour d'un élément magnétique, permettant un chauffage homogène de la filière et principalement de la partie de la filière comprenant les trous de coulée. Ce solénoïde est avantageusement un tube de cuivre.

De plus, selon l'invention, une circulation 13 de fluide de refroidissement est prévue dans les inducteurs. Cette circulation peut être assurée par l'utilisation d'inducteur en cuivre creux. Le fluide de refroidissement est avantageusement, soit de l'air soit de l'eau, soit tout fluides frigo-porteurs.

L'inducteur 11 est connecté à un générateur (non représenté) délivrant une puissance appropriée et comprenant avantageusement un moyen d'asservissement qui permet de réguler le fonctionnement et l'alimentation de l'inducteur par mesure de la température de la filière. Cette alimentation est réalisée avec un courant de fréquences quelconques telles que basses fréquences, moyennes fréquences ou hautes fréquences, selon la géométrie de la filière à chauffer.

L'exemple ci-dessous illustre le fonctionnement d'une installation discontinue de production de polyester équipée d'une filière selon l'invention.

Le réacteur de polymérisation 1 contient une charge de polymère en cours d'élaboration, à une température de 285°C. La vanne 5 est fermée.

Quand le degré de polymérisation est atteint, la filière 4b est chauffée à une température comprise entre 270 et 290°C par alimentation de l'inducteur 11 avec un courant de fréquences à 500 Hz. Cette mise en température s'effectue en quelques secondes. La vanne de fond 5 est ouverte, le polymère peut s'écouler immédiatement par les trous 9 de la filière, car le polymère qui pouvait être emprisonné dans les trous a été rendu fluide et éjectable par la mise en température préalable de la filière.

En conséquence, seule la partie contenue dans la filière avant l'ouverture de la vanne de fond devra être éliminée, cette élimination étant réalisée immédiatement pour tous les trous de la filière. La température de la filière est maintenue homogène pendant la durée de la coulée.

En fin de coulée, la filière est refroidie rapidement à une température de refroidissement définie ci-dessus, par exemple 250°C. Ce refroidissement est obtenu par arrêt de l'alimentation en courant de l'inducteur, mais maintient de la circulation du fluide de refroidissement.

Ainsi, le polymère est figé dans les trous de la filière et forme un bouchon étanche.

La température de la filière est alors maintenue à une température supérieure à la température de cristallisation du polymère, à savoir pour le polyéthylène téréphtalate, à une température supérieure à 200°C. En effet, un refroidissement à une température trop basse peut provoquer une rétraction du polymère ou tout au moins supprimer l'adhérence du polymère à la surface des trous de filière, le bouchon n'étant alors plus étanche.

Le polyester obtenu selon le procédé de l'invention présente une qualité constante au cours de la coulée avec un indice de jaune variant faiblement d'un granulé à l'autre, l'indice total du polymère coulé (mesure statistique sur la coulée totale) ayant une valeur inférieure à celle d'un polymère obtenu avec coulée dans une filière non chauffée par induction. Ce gain sur l'indice de jaune peut être évalué à plusieurs points.

Un autre avantage du procédé de l'invention est la possibilité de travailler à une température de filière plus élevée que la température du polymère dans le réacteur. Ainsi, la vitesse de coulée du polymère est augmentée, diminuant le temps de coulée. Les phénomènes de dégradation du polymère dans le réacteur intervenant surtout en fin de coulée sont également diminués.

## Revendications

1. Procédé de fabrication de polymères thermoplastiques comprenant les étapes suivantes :
• polymérisation d'un polymère dans un réacteur (1) de polymérisation jusqu'à un degré de polymérisation déterminé,
• coulée du polymère dans une filière (4) pour former des joncs ou des fils,
• refroidissement des joncs ou fils en sortie de filière, et
• récupération des joncs.
selon lequel la température de la filière (4) de coulée, au moins au voisinage des trous (9) de filière, est contrôlée et régulée par un ou des moyens de chauffage (11) et de refroidissement (13) disposés au voisinage des trous de filières.

2. Procédé selon la revendication 1, caractérisé en ce que la température de la filière (14) est régulée par un chauffage par induction électromagnétique.

3. Procédé selon l'une des revendications 1 ou 2, caractérisé en ce que le chauffage par induction électromagnétique est généré par au moins un inducteur (11) disposé au voisinage des trous (9) de filière.

4. Procédé selon l'une des revendications précédentes, caractérisé en ce que les moyens de refroidissement (13) sont distincts des moyens de chauffage (11).

5. Procédé selon la revendication 3, caractérisé en ce que les moyens de refroidissement (13) de la filière comprennent les moyens de refroidissement des inducteurs électromagnétiques (11).

6. Procédé selon l'une des revendications précédentes, caractérisé en ce que, avant le début d'une coulée, la filière est portée à une température sensiblement égale à la température de coulée.

7. Procédé selon l'une des revendications précédentes, caractérisé en ce que, en fin ou arrêt d'une coulée de polymère, la filière (14) est refroidie à une température de refroidissement à laquelle le polymère est dans un état figé, c'est à dire ne s'écoule pas sous son propre poids, mais que sa surface reste adhésive au paroi du trou de filière.

8. Filière de coulée de polymère thermoplastique comprenant des moyens de chauffage (11) et de refroidissement (13) pour réguler sa température.

9. Filière selon la revendication 8, caractérisée en ce que les moyens de chauffage sont constitués par au moins un inducteur électromagnétique (11).

10. Filière selon la revendication 8 ou 9, caractérisée en ce que les moyens de refroidissement (13) sont constitués par des canaux (10) formés sur ou dans la filière pour assurer une circulation d'un fluide de refroidissement.

11. Filière selon la revendication 8 ou 9, caractérisée en ce que les moyens de refroidissement de la filière sont constitués par les moyens de refroidissement (13) du ou des inducteurs électromagnétiques (11).

12. Filière selon l'une des revendications 9 à 11, caractérisée en ce que le ou les inducteurs électromagnétiques sont disposés dans une gorge (10) formée sur la face de sortie (4a) de la filière (4), au voisinage des trous (9) de filière.

## Patentansprüche

1. Verfahren zur Herstellung von thermoplastischen Polymeren, umfassend die folgenden Stufen:
- Polymerisation eines Polymeren in einem Polymerisationsreaktor (1) bis zu einem vorbestimmten Polymerisationsgrad,
- Schmelzen des Polymeren in eine Düse (4), um Stücke oder Fäden zu bilden,
- Abkühlen der Stücke oder Fäden am Ausgang der Düse, und
- Gewinnen der stücke,
wobei die Temperatur der Schmelzdüse (4) mindestens in der Nähe der Düsenköpfe (9) durch ein oder mehrere Heizglied(er) (11) und Kühlglied(er) (13), die in der Nähe der Düsenköpfe angebracht ist/sind, kontrolliert und reguliert wird.

2. Verfahren nach Anspruch 1, dadurch gekennzeichnet, daß die Temperatur der Düse (14) durch Erhitzen mittels elektromagnetischer Induktion reguliert wird.

3. Verfahren nach einem der Ansprüche 1 oder 2, dadurch gekennzeichnet, daß das Erhitzen mittels elektromagnetischer Induktion durch mindestens einen Induktor (11), der in der Nähe der Düsenköpfe (9) angeordnet ist, durchgeführt wird.

4. Verfahren nach einem der vorstehenden Ansprüche, dadurch gekennzeichnet, daß die Kühlglieder (13) von den Heizgliedern (11) getrennt sind.

5. Verfahren nach Anspruch 3, dadurch gekennzeichnet, daß die Kühlglieder (13) der Düse Kühlglieder mit elektromagnetischen Induktoren (11) umfassen.

6. Verfahren nach einem der vorstehenden Ansprüche, dadurch gekennzeichnet, daß vor dem Beginn des Schmelzens die Düse auf eine Temperatur gebracht wird, die deutlich der Schmelztemperatur entspricht.

7. Verfahren nach einem der vorstehenden Ansprüche, dadurch gekennzeichnet, daß am Ende oder nach Beendigung des Schmelzens des Polymeren die Düse (14) auf eine Abkühlungstemperatur gekühlt wird, bei der das Polymere in einem erstarrten Zustand vorliegt, d.h. nicht unter seinem eigenen Gewicht fließt, aber dessen Oberfläche an der Wand des Düsenkopfes kleben bleibt.

8. Düse zum Schmelzen eines thermoplastischen Polymeren, umfassend Heiz- (11) und Kühlglieder (13) zur Regulierung der Temperatur davon.

9. Düse nach Anspruch 8, dadurch gekennzeichnet, daß die Heizglieder aus mindestens einem elektromagnetischen Induktor (11) bestehen.

10. Düse nach Anspruch 8 oder 9, dadurch gekennzeichnet, daß die Kühlglieder (13) aus Kanälen (10) bestehen, die auf oder in der Düse gebildet sind, um eine Zirkulation der Kühlflüssigkeit zu gewährleisten.

11. Düse nach Anspruch 8 oder 9, dadurch gekennzeichnet, daß die Kühlglieder der Düse aus Kühlgliedern (13) des elektromagnetischen Induktors oder der elektromagnetischen Induktoren (11) bestehen.

12. Düse nach einem der Ansprüche 9 bis 11, dadurch gekennzeichnet, daß der oder die elektromagnetische(n) Induktor(en) in einer Rille (10) angeordnet ist/sind, die auf der Front des Ausgangs (4a) der Düse (4) in der Nähe der Düsenköpfe (9) gebildet ist.

## Claims

1. Process for manufacturing thermoplastic polymers comprising the following steps:
• polymerization of a polymer in a polymerization reactor (1) as far as a predetermined degree of polymerization,
• extrusion of the polymer through a die (4) in order to form rods or filaments,
• cooling of the rods or filaments as they exit the die, and • recovery of the rods,
in which process the temperature of the extrusion die (4), at least near the die orifices (9), is controlled and regulated by at least one heating means (11) and cooling means (13) placed near the die orifices.

2. Process according to Claim 1, characterized in that the temperature of the die (4) is regulated by electromagnetic induction heating.

3. Process according to either of Claims 1 and 2, characterized in that the electromagnetic induction heating is generated by at least one inductor (11) placed near the die orifices (9).

4. Process according to one of the preceding claims, characterized in that the cooling means (13) are separate from the heating means (11).

5. Process according to Claim 3, characterized in that the means (13) for cooling the die comprise means for cooling the electromagnetic inductors (11).

6. Process according to one of the preceding claims, characterized in that, before the start of an extrusion, the die is heated to a temperature approximately equal to the extrusion temperature.

7. Process according to one of the preceding claims, characterized in that, after polymer extrusion has ended or is stopped, the die (14) is cooled to a cooling temperature at which the polymer is in a frozen state, that is to say it does not flow under its own weight, but its surface remains adhesive with respect to the wall of the die orifice.

8. Thermoplastic polymer extrusion die comprising heating means (11) and cooling means (13) for regulating its temperature.

9. Die according to Claim 8, characterized in that the heating means consist of at least one electromagnetic inductor (11).

10. Die according to Claim 8 or 9, characterized in that the cooling means (13) consist of channels (10) formed in or on the die in order to ensure circulation of a coolant.

11. Die according to Claim 8 or 9, characterized in that the means for cooling the die consist of the means (13) for cooling the electromagnetic inductor or inductors (11).

12. Die according to one of Claims 9 to 11, characterized in that the electromagnetic inductor or inductors is or are placed in a groove (10) formed on the exit face (4a) of the die (4), near the die orifices (9) .
